(19) Europäisches Patentamt / European Patent Office / Office européen des brevets

(11) **EP 4 432 755 A1**

(12) **EUROPEAN PATENT APPLICATION**
published in accordance with Art. 153(4) EPC

(43) Date of publication:
**18.09.2024 Bulletin 2024/38**

(21) Application number: **22892143.3**

(22) Date of filing: **14.11.2022**

(51) International Patent Classification (IPC):
**H04W 72/04** (2023.01)

(52) Cooperative Patent Classification (CPC):
**H04W 72/04; H04W 72/0453; H04W 72/232**

(86) International application number:
**PCT/CN2022/131738**

(87) International publication number:
**WO 2023/083350 (19.05.2023 Gazette 2023/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.11.2021 CN 202111342504**

(71) Applicants:
• **CHINA MOBILE COMMUNICATION CO., LTD. RESEARCH INSTITUTE**
  **Beijing 100053 (CN)**

• **CHINA MOBILE COMMUNICATIONS GROUP CO., LTD.**
  **Beijing 100032 (CN)**

(72) Inventors:
• **YANG, Tuo**
  **Beijing 100032 (CN)**
• **HU, Lijie**
  **Beijing 100032 (CN)**

(74) Representative: **Maiwald GmbH**
  **Elisenhof**
  **Elisenstraße 3**
  **80335 München (DE)**

(54) **FREQUENCY DOMAIN RESOURCE ALLOCATION METHOD AND APPARATUS, AND DEVICE**

(57) The present disclosure provides a frequency domain resource allocation method and apparatus, and a device. The frequency domain resource allocation method comprises: sending downlink control information (DCI) to a terminal, wherein the DCI is used for indicating the frequency domain resource allocation of a physical shared channel, and the frequency domain resources of the physical shared channel are located within one or more frequency domain resource ranges.

11

send downlink control information (DCI) to a terminal, in which the DCI is used to indicate frequency domain resource assignment for physical shared channel, and frequency domain resources of the physical shared channel are located within one or more frequency domain resource ranges

**FIG. 1**

EP 4 432 755 A1

## Description

### CROSS REFERENCE TO RELATED APPLICATIONS

This application claims priority to Chinese patent application No. 202111342504.8, filed on November 12, 2021, the entire content of which is incorporated herein by reference.

### TECHNICAL FIELD

The disclosure relates to a field of communication technology, in particular to methods for frequency domain resource assignment, apparatuses frequency domain resource assignment and related devices.

### BACKGROUND

Currently, there are many discontinuous spectrums with smaller bandwidths in New Radio (NR). According to the previous spectrum usage, a terminal can only perform carrier aggregation of these carriers, and a Transport Block (TB) can still only be transmitted within one carrier. Since the bandwidth of each carrier is very small and cannot support a larger TB size, for a service packet, the base station can only split it into multiple small TBs for transmission, and multiple physical downlink control channels (PDCCHs) are required for scheduling respectively, resulting in relatively large PDCCH overhead. The throughput of carrier usage is limited by the fact that the bandwidth of each carrier is very small, and also by the inability to support a PDCCH with a larger aggregation level.

### SUMMARY

The technical problem to be solved by the disclosure is to provide methods and apparatuses for frequency domain resource assignment and related devices, to realize scheduling for multiple different frequency domain resources through one downlink control information (DCI), improve a throughput of carrier usage, and reduce an overhead of a physical downlink control channel (PDCCH).

In order to solve the above technical problem, the technical solutions of the disclosure are provided as follows.

According to a first aspect of embodiments of the disclosure, a method for frequency domain resource assignment, applied to a network side device, is provided. The method includes:
sending downlink control information (DCI) to a terminal, in which the DCI is used to indicate frequency domain resource assignment for physical shared channel, and frequency domain resource of the physical shared channel are located within one or more frequency domain resource ranges.

In some embodiments, the DCI includes a first information field and a second information field;

the first information field is used to indicate index(s) of the one or more frequency domain resource ranges where the frequency domain resources of the physical shared channel are located in; and
the second information field is used to indicate the frequency domain resource assignment within a frequency domain resource range.

In some embodiments, the first information field adopts a bitmap or a codepoint to indicate the index(s) of the one or more frequency domain resource ranges.

In some embodiments, the frequency domain resource range(s) includes(include): a first frequency domain resource range with a minimum bandwidth and at least one second frequency domain resource range other than the first frequency domain resource range.

In some embodiments, a size of bits of the second information field is equal to a size of bits for resource assignment determined based on a bandwidth of the first frequency domain resource range.

In some embodiments, when the frequency domain resource assignment is type 1, a start resource block (RB) of the second frequency domain resource range corresponding to a resource indication value (RIV) included in the second information field is:

$$ \mathrm{RB_{start}} = 0, \mathrm{K}, 2 \cdot \mathrm{K}, \ldots, (\mathrm{N_{min}^{size}} - 1) \cdot \mathrm{K}; $$

a number of RBs that are consecutively assigned is

$$ \mathrm{L_{RBs}} = \mathrm{K}, 2 \cdot \mathrm{K}, \ldots, \mathrm{N_{min}^{size}} \cdot \mathrm{K} ; $$

in which, $\mathrm{N_{min}^{size}}$ represents a bandwidth size of the first frequency domain resource range or a number of physical resource blocks (PRBs); and
K represents a ratio of a bandwidth of the second frequency domain resource range to a bandwidth of the first frequency domain resource range.

In some embodiments, when the frequency domain resource assignment is type 0, bits of the second information field correspond to resource block groups (RBGs) of the second frequency domain resource range, in which

a size of a first RBG is
$$ \mathrm{RBG_0^{size}} = \mathrm{P} * \mathrm{K} - \mathrm{N_{other,i}^{start}} \bmod \mathrm{P} * \mathrm{K} ; $$
if $\left( \mathrm{N_{othe\,,i}^{start}} + \mathrm{N_{other,i}^{size}} \right) \bmod \mathrm{P} * \mathrm{K} > 0$, a size of a last RBG is $\mathrm{RBG_{last}^{size}} = \left( \mathrm{N_{other,i}^{start}} + \mathrm{N_{other,i}^{size}} \right) \bmod \mathrm{P} * \mathrm{K}$, otherwise, the size of the last RBG is P $_*$ K, and a size of each remaining RBG is P*K;

where P represents a size of RBG of the first frequency domain resource range, K represents a ratio of a bandwidth of the second frequency domain resource range to a bandwidth of the first frequency domain resource range; $N_{other,i}^{start}$ represents a resource starting position of the second frequency domain resource range, and $N_{other,i}^{size}$ represents a bandwidth size of the second frequency domain resource range or a number of PRBs.

According to a second aspect of embodiments of the disclosure, a method for frequency domain resource assignment, applied to a terminal, is provided. The method includes:

receiving downlink control information (DCI) sent by a network side device, in which the DCI is used to indicate frequency domain resource assignment for physical shared channel, and frequency domain resources of the physical shared channel are located within one or more frequency domain resource ranges.

In some embodiments, the DCI includes a first information field and a second information field;

the first information field is used to indicate index(s) of the one or more frequency domain resource ranges where the frequency domain resources of the physical shared channel are located in; and
the second information field is used to indicate the frequency domain resource assignment within a frequency domain resource range.

In some embodiments, the first information field adopts a bitmap or a codepoint to indicate the terminal the index(s) of the one or more scheduled frequency domain resource ranges.

In some embodiments, the frequency domain resource range(s) includes(include): a first frequency domain resource range with a minimum bandwidth and at least one second frequency domain resource range other than the first frequency domain resource range.

In some embodiments, a size of bits of the second information field is equal to a size of bits for resource assignment determined based on a bandwidth of the first frequency domain resource range.

In some embodiments, when the frequency domain resource assignment is type 1, a start resource block (RB) of the second frequency domain resource range corresponding to a resource indication value (RIV) included in the second information field is:

$$RB_{start} = 0, K, 2 \cdot K, ..., (N_{min}^{size} - 1) \cdot K;$$

a number of RBs that are consecutively assigned is

$$L_{RBs} = K, 2 \cdot K, ..., N_{min}^{size} \cdot K;$$

in which, $N_{min}^{size}$ represents a bandwidth size of the first frequency domain resource range or a number of physical resource blocks (PRBs); and
K represents a ratio of a bandwidth of the second frequency domain resource range to a bandwidth of the first frequency domain resource range.

In some embodiments, when the frequency domain resource assignment is type 0, bits of the second information field corresponds to RBGs of the second frequency domain resource range, in which

a size of a first RBG is $$RBG_0^{size} = P * K - N_{other,i}^{start} \bmod P * K;$$ if $\left(N_{other,i}^{start} + N_{other,i}^{size}\right) \bmod P * K > 0$, a size of a last RBG is $RBG_{last}^{size} = \left(N_{other,i}^{start} + N_{other,i}^{size}\right) \bmod P * K$, otherwise, the size of the last RBG is P $_*$ K, and a size of each remaining RBG is P*K;

where P represents a size of RBG of the first frequency domain resource range, K represents a ratio of a bandwidth of the second frequency domain resource range to a bandwidth of the first frequency domain resource range; $N_{other,i}^{start}$ represents a resource starting position of the second frequency domain resource range, and $N_{other,i}^{size}$ represents a bandwidth size of the second frequency domain resource range or a number of PRBs.

According to a third aspect of embodiments of the disclosure, an apparatus for frequency domain resource assignment, applied to a network side device, is provided. The apparatus includes:
a transceiver module, configured to send downlink control information (DCI) to a terminal, in which the DCI is used to indicate frequency domain resource assignment for physical shared channel, and frequency domain resources of the physical shared channel are located within one or more frequency domain resource ranges.

According to a fourth aspect of embodiments of the disclosure, an apparatus for frequency domain resource assignment, applied to a terminal, is provided. The apparatus includes:
a transceiver module, configured to receive downlink control information (DCI) sent by a network side device, in which the DCI is used to indicate frequency domain resource assignment for physical shared channel, and frequency domain resources of the physical shared channel are located within one or more frequency domain resource ranges.

According to a fifth aspect of embodiments of the disclosure, a communication device is provided, which includes a processor and a memory having a computer program stored thereon. When the computer program is executed by the processor, any of the above methods is performed.

According to a sixth aspect of embodiments of the disclosure, a computer-readable storage medium having instructions stored thereon is provided. When the instructions are executed by a computer, the computer is caused to perform any of the above methods.

The above solutions of the disclosure at least include the following beneficial effects.

The DCI is sent to the terminal. The DCI is used to indicate the frequency domain resource assignment for physical shared channel, and frequency domain resources of the physical shared channel are located within one or more frequency domain resource ranges. Therefore, the scheduling for multiple different frequency domain resources is realized using one DCI, the throughput of carrier usage is improved, the overhead of a PDCCH is reduced, and the user experience and network performance are enhanced.

## BRIEF DESCRIPTION OF THE DRAWINGS

FIG. 1 is a flowchart illustrating a method for frequency domain resource assignment according to an embodiment of the disclosure.

FIG. 2 is a schematic diagram illustrating a spectrum of a first type of bandwidth according to an embodiment of the disclosure.

FIG. 3 is a schematic diagram illustrating a spectrum of a second type of bandwidth according to an embodiment of the disclosure.

FIG. 4 is a schematic diagram illustrating a spectrum of a third type of bandwidth according to an embodiment of the disclosure.

FIG. 5 is a schematic diagram illustrating modules of an apparatus for frequency domain resource assignment according to an embodiment of the disclosure.

## DETAILED DESCRIPTION

Embodiments of the disclosure will be described in detail below with reference to the accompanying drawings. Although the embodiments of the disclosure are shown in the accompanying drawings, it is understandable that the disclosure may be realized in various forms instead of being limited by embodiments set forth herein. Instead, these embodiments are provided to enable a more thorough understanding of the disclosure and to convey the scope of the disclosure completely to those skilled in the art.

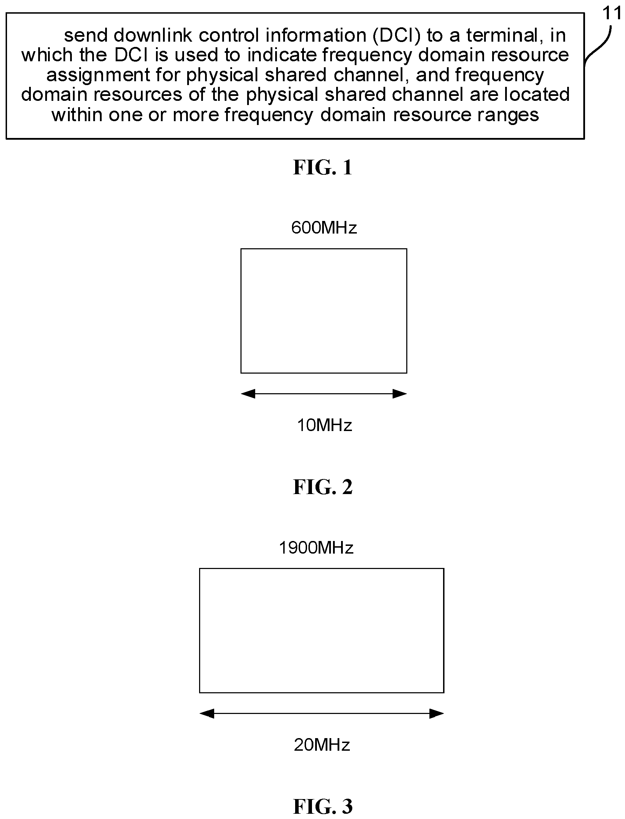

As illustrated in FIG. 1, embodiments of the disclosure provide a method for frequency domain resource assignment, which is applied to a network side device. The method includes a block 11.

At block 11, downlink control information (DCI) is sent to a terminal, in which the DCI is used to indicate frequency domain resource assignment for physical shared channel, and frequency domain resources of the physical shared channel are located within one or more frequency domain resource ranges.

In this embodiment, the DCI may be sent to the terminal. The DCI is used to indicate the frequency domain resource assignment for the physical shared channel, and the frequency domain resources of the physical shared channel are located within one or more frequency domain resource ranges. The scheduling for multiple different frequency domain resource ranges may be realized using one DCI, to improve the throughput of carrier usage and reduce the overhead of a physical downlink control channel (PDCCH).

In an optional embodiment of the disclosure, in block 11, the DCI includes a first information field and a second information field.

The first information field is used to indicate index(s) of the one or more frequency domain resource ranges where the frequency domain resources of the physical shared channel are located in.

The second information field is used to indicate the frequency domain resource assignment within a frequency domain resource range.

The frequency domain resource range is a carrier or a Bandwidth Part (BWP).

In this embodiment, in detail, the second information field is used for indicating the frequency domain resource assignment for Physical Downlink Shared Channel (PDSCH) or Physical Uplink Shared Channel (PUSCH) within one carrier or BWP. The second information field is shared by multiple frequency domain resource ranges. In other words, multiple frequency domain resource ranges all refer to the frequency domain resource assignment indicated by the second information field, which saves the load size of the PDCCH and improves the throughput of the PDCCH.

In an optional embodiment of the disclosure, the first information field uses a bitmap or a codepoint to indicate the index(s) of the one or more frequency domain resource ranges.

In this embodiment, the first information field uses a bitmap or a codepoint to indicate the index(s) of at least one frequency domain resource range where the actually scheduled PDSCH or PUSCH is located in. For example, when there are 5 carriers or BWPs, a 5-bitmap may be used to indicate which carriers or BWPs are scheduled.

When actually scheduling at least two target frequency domain resources, it is also possible that some carriers or BWPs are combined or configured at the base station, and then the combined or configured index is indicated through the first information field.

In an optional embodiment of the disclosure, the frequency domain resource range includes: a first frequency domain resource range with a minimum bandwidth and at least one second frequency domain resource range other than the first frequency domain resource range.

In this embodiment, the first frequency domain resource range is a frequency domain resource range of which the bandwidth is the minimum between at least two frequency domain resource ranges.

In an optional embodiment of the disclosure, a size of bits of the second information field is equal to a size of bits for resource assignment determined based on a bandwidth of the first frequency domain resource range.

In this embodiment, the terminal determines at least one scheduled frequency domain resource range and the frequency domain resource assignment in the at least one scheduled frequency domain resource range based on the first information field and the second information field. The frequency domain resource assignment for the physical channel within each of multiple scheduled frequency domain resource ranges may be all referred to an indication of the second information field. Considering that the bandwidth sizes of the multiple frequency domain resource ranges may be different, the size of the second information field in this embodiment is determined based on the bandwidth of the minimum frequency domain resource range. That is, the size of the second information field is fixed and the load size of the DCI is also fixed, regardless of the index(s) of the scheduled frequency domain resource range(s) indicated by the first information field, thereby simplifying the complexity of receiving, by the terminal, the PDCCH.

In an optional embodiment of the disclosure, when the frequency domain resource assignment is type 1 (i.e., continuous resource assignment), a start resource block (RB) of the second frequency domain resource range corresponding to a resource indication value (RIV) included in the second information field is:

$$RB_{start} = 0, K, 2 \cdot K, \ldots, (N_{min}^{size} - 1) \cdot K;$$

a number of RBs that are consecutively assigned is

$$L_{RBs} = K, 2 \cdot K, \ldots, N_{min}^{size} \cdot K;$$

where, $N_{min}^{size}$ represents a bandwidth size of the first frequency domain resource range or a number of physical resource blocks (PRBs); and

K represents a ratio of a bandwidth of the second frequency domain resource range to a bandwidth of the first frequency domain resource range, e.g.,

$$K \leq \lfloor N_{other,i}^{size} / N_{min}^{size} \rfloor.$$

In this embodiment, the scheduled frequency domain resource range(s) indicated in the first information field includes(include) a second frequency domain resource range. For the second frequency domain resource range, a frequency domain resource position occupied by a scheduled PDSCH or PUSCH within the second frequency domain resource range is determined using the above method.

When the scheduled frequency domain resource range(s) indicated in the first information field includes(include) the first frequency domain resource range, for the first frequency domain resource range, the frequency domain resource position occupied by a scheduled PDSCH or PUSCH within the first frequency domain resource range is determined based on a relevant method.

In an optional embodiment of the disclosure, when the frequency domain resource assignment is type 0 (i.e., discontinuous resource assignment), bits of the second information field correspond to resource block groups (RBGs) of the second frequency domain resource range, in which,

a size of a first RBG is

$$RBG_0^{size} = P * K - N_{other,i}^{start} \bmod P * K;$$

if $\left(N_{other,i}^{start} + N_{other,i}^{size}\right) \bmod P * K > 0$, a size of a last RBG is $RBG_{last}^{size} = \left(N_{other,i}^{start} + N_{other,i}^{size}\right) \bmod P * K$, otherwise, the size of the last RBG is P * K, and a size of each remaining RBG is P*K;

where P represents a size of RBG of the first frequency domain resource range, K represents a ratio of a bandwidth of the second frequency domain resource range to a bandwidth of the first frequency domain resource range; $N_{other,i}^{start}$ represents a resource starting position of the second frequency domain resource range, and $N_{other,i}^{size}$ represents a bandwidth size of the second frequency domain resource range or a number of PRBs.

In this embodiment, the scheduled frequency domain resource range(s) indicated in the first information field includes(include) a second frequency domain resource range. For the second frequency domain resource range, the frequency domain resource position occupied by a scheduled PDSCH or PUSCH within the second frequency domain resource range is determined by the method described above.

When the scheduled frequency domain resource range(s) indicated in the first information field includes(include) a first frequency domain resource range, for the first frequency domain resource range, the frequency domain resource position occupied by a scheduled PDSCH or PUSCH within the first frequency domain resource range is determined based on a preset method.

As illustrated in FIGS. 2-4, currently, there are many discontinuous spectrums with smaller bandwidths in the NR network. FIGS. 2-4 are schematic diagrams illustrating carriers or BWPs with three types of bandwidth respectively. These small carriers or BWPs that are discontinuous may be scheduled by one DCI, so that a PDSCH or PUSCH may be mapped on at least one discontinuous frequency domain resource.

For example, the base station sends the DCI to the terminal. The DCI is used for scheduling the PDSCH or PUSCH. The frequency domain resource range(s) indicated by the first information field of the DCI include at least one of the carriers or BWPs illustrated in FIG. 2, FIG. 3 and FIG. 4. The terminal determines, based on the first information field and the second information field, at least one scheduled frequency domain resource range, a size of bits for the frequency domain resource assignment on the scheduled frequency domain resource ranges and frequency domain resource assignment positions in the scheduled frequency domain resource ranges.

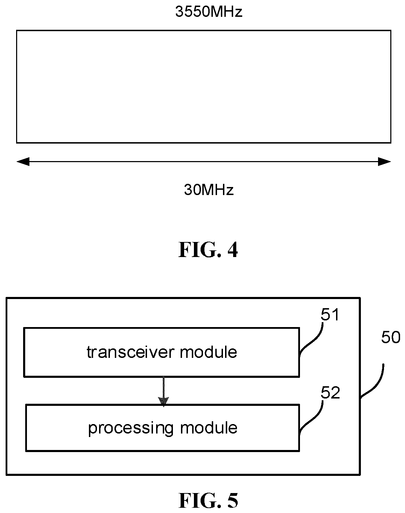

The first frequency domain resource range may be a carrier illustrated in FIG. 2, and the second frequency domain resource range may be a carrier or BWP illustrated in FIG. 3 or 4. The first frequency domain resource range is a frequency domain resource range of which bandwidth is the smallest among the at least one frequency domain resource range. The second information field of the DCI indicates to assign these scheduled frequency domain resources based on the bandwidth of the first frequency domain resource range, i.e., the bandwidth of 10M. That is, the size of bits for the frequency domain resource assignment is equal to the size of bits for the frequency domain resource indication determined based on the first frequency domain resource range.

For the second frequency domain resource range illustrated in FIGS. 3 and 4, if the first information filed indicates that the scheduled frequency domain resource range(s) includes(include) the frequency domain resource range illustrated in FIGS. 3 and/or 4, the frequency domain resources of 20MHz and 30MHz need to be mapped based on the size of bits for the frequency domain resource assignment of 10MHz. When mapping,

1) For resource assignment type 1 (i.e., continuous resource assignment)

The terminal explains the RIV indicated by the second information field, in which a start RB corresponding to the RIV is:

$$RB_{start} = 0, K, 2 \cdot K, \dots, (N_{min}^{size} - 1) \cdot K$$, a number of continuously assigned RBs is $$L_{RBs} = K, 2 \cdot K, \dots, N_{min}^{size} \cdot K$$, where $N_{min}^{size}$ represents a bandwidth size of the first frequency domain resource range or a number of PRBs, and K represents a ratio of a bandwidth of the second frequency domain resource range to a bandwidth of the first frequency domain resource range, e.g., $K \leq \lfloor N_{other,i}^{size}/N_{min}^{size} \rfloor$ or $K \leq \lceil N_{other,i}^{size}/N_{min}^{size} \rceil$.

For example, for the frequency domain resource range illustrated in FIG. 3, K = 2; and for the frequency domain resource range illustrated in FIG. 4, K = 3.

2) For resource assignment type 0 (i.e., discontinuous resource assignment)

The terminal explains the bitmap indicated by the second information field.

Bits of the second information field correspond to RBGs of the second frequency domain resource range, in which, a size of a first RBG is $$RBG_0^{size} = P * K - N_{other,i}^{start} \bmod P * K$$; if $\left(N_{other,i}^{start} + N_{other,i}^{size}\right) \bmod P * K > 0$, a size of a last RBG is $$RBG_{last}^{size} = \left(N_{other,i}^{start} + N_{other,i}^{size}\right) \bmod P * K$$, otherwise, the size of the last RBG is P $*$ K, and a size of remaining RBGs is P*K; where P represents a size of a RBG of the first frequency domain resource range, K represents a ratio of a bandwidth of the second frequency domain resource range to a bandwidth of the first frequency domain resource range, e.g., $K \leq \lfloor N_{other,i}^{size}/N_{min}^{size} \rfloor$ or $K \leq \lceil N_{other,i}^{size}/N_{min}^{size} \rceil$; $N_{other,i}^{start}$ represents a resource starting position of the second frequency domain resource range, and $N_{other,i}^{size}$ represents a bandwidth size of the second frequency domain resource range or a number of PRBs.

For example, for the frequency domain resource range illustrated in FIG. 3, K = 2; and for the frequency domain resource range illustrated in FIG. 4, K = 3.

In this way, the throughput may be improved by using multiple carriers, a TB packet may be mapped on the discontinuous frequency domain resources, the complexity of processing multiple TB packets by the terminal may be reduced, and the addition of a new PDCCH may be avoided. In addition, the PUSCH sent by the terminal to the base station may be mapped on the same frequency domain resource as the PDSCH.

In above embodiments of the disclosure, the DCI is sent to the terminal. The DCI is used to indicate the frequency domain resource assignment for physical shared channel, and the frequency domain resources of the physical shared channel are located within one or more frequency domain resource ranges. The amount of DCI may be reduced to reduce network side signaling overhead while realizing flexible scheduling of single carrier/multi carriers/frequency domain resources/BWPs, to realize the mapping of a TB packet on discontinuous frequency domain resources, and reduce the complexity of the terminal in handling multiple TB packets. Through the definitions of the first frequency domain resource range and the second frequency domain resource range, the size of the second information field may be determined, to reduce the number of load sizes of different DCI and to reduce the complexity of detecting the PDCCH at the terminal.

Embodiments of the disclosure also provide a method for frequency domain resource assignment, which is applied to a terminal. The method includes: receiving DCI sent by a network side device, in which the DCI is used to indicate frequency domain resource assignment for physical shared channel, and frequency domain resources of the physical shared channel are located within one or more frequency domain resource ranges.

In some examples, the DCI includes a first information field and a second information field;

> the first information field is used to indicate index(s) of the one or more frequency domain resource ranges where the frequency domain resources of the physical shared channel are located in; and
> the second information field is used to indicate frequency domain resource assignment within a frequency domain resource range.

In some examples, the first information field uses a bitmap or a codepoint to indicate the terminal the index(s) of the one or more scheduled frequency domain resource ranges.

In some examples, the frequency domain resource range(s) includes(include): a first frequency domain resource range with a minimum bandwidth and at least one second frequency domain resource range other than the first frequency domain resource range.

In some examples, a size of bits of the second information field is equal to a size of bits of resource assignment determined based on a bandwidth of the first frequency domain resource range.

In some examples, when the frequency domain resource assignment is type 1, a start RB of the second frequency domain resource range corresponding to a RIV included in the second information field is:

$$RB_{start} = 0, K, 2 \cdot K, \ldots, (N_{min}^{size} - 1) \cdot K;$$

a number of RBs that are continuously assigned is

$$L_{RBs} = K, 2 \cdot K, \ldots, N_{min}^{size} \cdot K;$$

where, $N_{min}^{size}$ represents a bandwidth size of the first frequency domain resource range or a number of PRBs; and

K represents a ratio of a bandwidth of the second frequency domain resource range to a bandwidth of the first frequency domain resource range.

In some examples, when the frequency domain resource assignment is type 0, bits of the second information field correspond to RBGs of the second frequency domain resource range, in which

a size of a first RBG is

$$RBG_0^{size} = P * K - N_{other,i}^{start} \bmod P * K;$$

if $\left(N_{othe,i}^{start} + N_{other,i}^{size}\right) \bmod P * K > 0$, a size of a last RBG is $RBG_{last}^{size} = \left(N_{othe,i}^{start} + N_{other,i}^{size}\right) \bmod P * K$, otherwise, the size of the last RBG is P * K, and a size of remaining RBGs is P*K;

where P represents a size of a RBG of the first frequency domain resource range, K represents a ratio of a bandwidth of the second frequency domain resource range to a bandwidth of the first frequency domain resource range; $N_{other,i}^{start}$ represents a resource starting position of the second frequency domain resource range, and $N_{other,i}^{size}$ represents a bandwidth size of the second frequency domain resource range or a number of PRBs.

It is noteworthy that the method applied to the terminal is corresponding to the above methods applied to the network side device, and all the implementations of realizing the above methods applied to the network side device are applicable to the method applied to the terminal and may achieve the same technical effects.

As illustrated in FIG. 5, embodiments of the disclosure provide an apparatus 50 for frequency domain resource assignment which is applied to a network side device. The apparatus includes: a transceiver module 51, configured to send DCI to a terminal, in which the DCI is used to indicate frequency domain resource assignment for physical shared channel, and frequency domain resources of the physical shared channel are located within one or more frequency domain resource ranges.

In some examples, the DCI includes a first information field and a second information field;

the first information field is used to indicate index(s) of the one or more frequency domain resource ranges where the frequency domain resources of the physical shared channel are located in; and
the second information field is used to indicate frequency domain resource assignment within a frequency domain resource range.

In some examples, the first information field uses a bitmap or a codepoint to indicate the index(s) of the one or more frequency domain resource ranges

In some examples, the frequency domain resource range(s) includes(include): a first frequency domain resource range with a minimum bandwidth and at least one second frequency domain resource range other than the first frequency domain resource range.

In some examples, a size of bits of the second information field is equal to a size of bits for resource assignment determined based on a bandwidth of the first frequency domain resource range.

In some examples, when the frequency domain resource assignment is type 1, a start RB of the second frequency domain resource range corresponding to a RIV included in the second information field is:

$$RB_{start} = 0, K, 2 \cdot K, \ldots, (N_{min}^{size} - 1) \cdot K;$$

a number of RBs that are continuously assigned is

$$L_{RBs} = K, 2 \cdot K, \ldots, N_{min}^{size} \cdot K;$$

where, $N_{min}^{size}$ represents a bandwidth size of the first frequency domain resource range or a number of PRBs; and
K represents a ratio of a bandwidth of the second frequency domain resource range to a bandwidth of the first frequency domain resource range.

In some examples, when the frequency domain resource assignment is type 0, bits of the second information field correspond to RBGs of the second frequency domain resource range, in which

a size of a first RBG is

$$RBG_0^{size} = P * K - N_{other,i}^{start} \bmod P * K;$$

if $\left(N_{other,i}^{start} + N_{other,i}^{size}\right) \bmod P * K > 0$, a size of a last RBG is $RBG_{last}^{size} = \left(N_{other,i}^{start} + N_{other,i}^{size}\right) \bmod P * K$, otherwise, the size of the last RBG is $P * K$, and a size of remaining RBGs is P*K;

where P represents a size of a RBG of the first frequency domain resource range, K represents a ratio of a bandwidth of the second frequency domain resource range to a bandwidth of the first frequency domain resource range; $N_{other,i}^{start}$ represents a resource starting position of the second frequency domain resource range, and $N_{other,i}^{size}$ represents a bandwidth size of the second frequency domain resource range or a number of PRBs.

It is noteworthy that the apparatus is an apparatus corresponding to the above method applied to the network side device, and all the implementations of realizing the method described above are applicable to the embodiments of the apparatus, and the same technical effects can also be achieved. The apparatus may also include a processing module 52 for processing data sent and received by the transceiver module 51.

Embodiments of the disclosure provides an apparatus for frequency domain resource assignment, which is applied to a terminal. The apparatus includes: a transceiver module, configured to receive DCI sent by a network side device, in which the DCI is used to indicate frequency domain resource assignment for physical shared channel, and the frequency domain resources of the physical shared channel are located within one or more frequency domain resource ranges.

In some examples, the DCI includes a first information field and a second information field;

the first information field is used to indicate index(s) of the one or more frequency domain resource ranges where the frequency domain resources of the physical shared channel are located in; and
the second information field is used to indicate the frequency domain resource assignment within a frequency domain resource range.

In some examples, the first information field uses a bitmap or a codepoint to indicate the index(s) of the one or more frequency domain resource ranges.

In some examples, the frequency domain resource range(s) includes(include): a first frequency domain resource range with a minimum bandwidth and at least one second frequency domain resource range other than the first frequency domain resource range.

In some examples, a size of bits of the second information field is equal to a size of bits for resource assignment determined based on a bandwidth of the first frequency domain resource range.

In some examples, when the frequency domain resource assignment is type 1, a start RB of the second frequency domain resource range corresponding to a RIV included in the second information field is:

$$RB_{start} = 0, K, 2 \cdot K, ..., (N_{min}^{size} - 1) \cdot K;$$

a number of RBs that are continuously assigned is

$$L_{RBs} = K, 2 \cdot K, ..., N_{min}^{size} \cdot K;$$

in which $N_{min}^{size}$ represents a bandwidth size of the first frequency domain resource range or a number of PRBs; and

K represents a ratio of a bandwidth of the second frequency domain resource range to a bandwidth of the first frequency domain resource range.

In some examples, when the frequency domain resource assignment is type 0, bits of the second information field correspond to RBGs of the second frequency domain resource range, in which

a size of a first RBG is

$$RBG_0^{size} = P * K - N_{other,i}^{start} \mod P * K;$$

if $\left(N_{other,i}^{start} + N_{other,i}^{size}\right) \mod P * K > 0$, a size of a last RBG is $RBG_{last}^{size} = \left(N_{other,i}^{start} + N_{other,i}^{size}\right) \mod P * K$, otherwise, the size of the last RBG is P * K, and a size of remaining RBGs is P*K;

where P represents a size of a RBG of the first frequency domain resource range, K represents a ratio of a bandwidth of the second frequency domain resource range to a bandwidth of the first frequency domain resource range; $N_{other,i}^{start}$ represents a resource starting position of the second frequency domain resource range, and $N_{other,i}^{size}$ represents a bandwidth size of the second frequency domain resource range or a number of PRBs.

It is noteworthy that the apparatus is an apparatus corresponding to the above method applied to the terminal, and all the implementations of realizing the method described above are applicable to the embodiments of the apparatus, and the same technical effects may also be achieved.

Embodiments of the disclosure also provide a communication device, which includes a processor and a memory having a computer program stored thereon. When the computer program is executed by the processor, the methods as described above may be performed. All the implementations of method embodiments described above are applicable to this embodiment and may achieve the same technical effects.

Embodiments of the disclosure also provide a computer readable storage medium having instructions stored thereon. When the instructions are executed by a computer, the computer is caused to perform the methods as described above. All the implementations of method embodiments described above are applicable to this embodiment and may achieve the same technical effects.

Those skilled in the art will appreciate that the units and algorithm steps of each example described in combination with the embodiments disclosed herein may be implemented by an electronic hardware, or a combination of computer software and the electronic hardware. Whether these functions are performed by hardware or software depends on the specific applications of the technical solution and the design constraints. Those skilled in the art may use different methods to implement the described functions for each specific application, but such implementations should not be considered to be beyond the scope of the disclosure.

Those skilled in the art can clearly understand that, for convenience and brevity of description, the specific working processes of the systems, devices and units described above can refer to the corresponding processes in the aforementioned method embodiments and will not be repeated here.

In embodiments according to the disclosure, it is understandable that the disclosed apparatuses and methods may be implemented in other ways. For example, embodiments of the apparatus described above are merely illustrative. For example, the classification of the units merely depends on logical functions, and there may be other classification methods in actual implementation. For example, multiple units or components may be combined or integrated into another system, or some features may be ignored or may not be executed. Moreover, the mutual coupling, direct coupling or communication connection shown or discussed may be an indirect coupling or a communication connection through some interfaces, devices or units, which may be electrical, mechanical or in other forms.

The units described as separate components may or may not be physically separated, and the components shown as units may or may not be physical units, that is, they may be located in one place or distributed over multiple network units. Some or all of the units may be selected according to actual needs to achieve the purpose of the solution of this embodiment.

In addition, each functional unit in each embodiment of the disclosure may be integrated into one processing unit, or each unit may exist physically separately, or two or more units may be integrated into one unit.

If the functions are implemented in the form of software functional units and sold or used as independent products, they can be stored in a computer-readable storage medium. Based on such understanding, the technical solution of the disclosure may essentially be embodied in the form of a software product, or the part that contributes to the related art or a part of the technical solution. The computer software product is stored in a storage medium and includes a number of instructions for enabling a computer device (which may be a personal computer, a server, or a network device, etc.) to execute all or part of the steps of the method described in each embodiment of the disclosure. The aforementioned storage medium includes: a USB flash drive, a mobile hard disk, a read only memory (ROM), a Random Access Memory (RAM), a disk or a CD-ROM, and various other mediums that can store program codes.

In addition, it should be noted that, in the apparatus and method of the disclosure, obviously, each component or step can be decomposed and/or recombined. These decompositions and/or recombinations should be regarded as equivalents of the disclosure. Moreover, the steps of executing the above series of processes can be naturally executed in a chronological order according to the described order, but they do not necessarily need to be executed in the chronological order, and some steps can be executed in parallel or independently. For those skilled in the art, it is understood that all or any steps or components of the methods and devices disclosed herein can be implemented by a hardware, a firmware, software, or a combination thereof in any computing devices (e.g., a processor, and a storage medium) or a network of the computing devices, which can be implemented by those skilled in the art using their basic programming skills after reading the description of the disclosure.

Therefore, the objects of the disclosure may also be achieved by running a program or a group of programs on any computing device. The computing device may be a known general-purpose device. Therefore, the object of the disclosure can also be achieved by merely providing a program product including a program code for implementing the method or apparatus. That is, such a program product also constitutes the disclosure, and a storage medium that stores such a program product also constitutes the disclosure. Obviously, the storage medium may be any known storage medium or any storage medium developed in the future. It should also be noted that, in the apparatus and method of the disclosure, it is apparent that each component or step can be decomposed and/or recombined. These decompositions and/or recombinations should be regarded as equivalents of the disclosure. Moreover, the steps of executing the above series of processes can be naturally executed in a chronological order according to the described order, but do not necessarily need to be executed in the chronological order. Certain steps may be performed in parallel or independently.

The above embodiments are preferred embodiments of the disclosure. It should be noted that for those skilled in the art, several improvements and modifications can be made without departing from the principles described in the disclosure. These improvements and modifications should also be regarded as the scope of protection of the disclosure.

**Claims**

1. A method for frequency domain resource assignment, applied to a network side device, comprising: sending downlink control information (DCI) to a terminal, wherein the DCI is used to indicate frequency domain resource assignment for physical shared channel, and frequency domain resources of the physical shared channel are located within one or more frequency domain resource ranges.

2. The method of claim 1, wherein the DCI comprises a first information field and a second information field;

   the first information field is used to indicate index(s) of the one or more frequency domain resource ranges where the frequency domain resources of the physical shared channel are located in; and
   the second information field is used to indicate the frequency domain resource assignment within a frequency domain resource range.

3. The method of claim 2, wherein the first information field uses a bitmap or a codepoint to indicate the index(s) of the one or more frequency domain resource ranges.

4. The method of claim 2, wherein the one or more frequency domain resource ranges comprise: a first frequency domain resource range with a minimum bandwidth and at least one second frequency domain resource range other than the first frequency domain resource range.

5. The method of claim 2 or 4, wherein a size of bits of the second information field is equal to a size of bits for a resource assignment determined based on a bandwidth of the first frequency domain resource range.

6. The method of claim 4, wherein when the frequency domain resource assignment is type 1, a start resource block (RB) of the second frequency domain resource range corresponding to a resource indication value (RIV) included in the second information field is:

$$RB_{start} = 0, K, 2 \cdot K, ..., (N_{min}^{size} - 1) \cdot K;$$

a number of RBs that are consecutively assigned is $L_{RBs} = K, 2 \cdot K, ..., N_{min}^{size} \cdot K$;

where, $N_{min}^{size}$ represents a bandwidth size of the first frequency domain resource range or a number of physical resource blocks (PRBs); and K represents a ratio of a bandwidth of the second frequency domain resource range to a bandwidth of the first frequency domain resource range.

7. The method of claim 4, wherein when the frequency domain resource assignment is type 0, bits of the second information field correspond to resource block groups (RBGs) of the second frequency domain resource range, wherein,

a size of a first RBG is

$$RBG_0^{size} = P * K - N_{other,i}^{start} \bmod P * K$$

; if $\left(N_{other,i}^{start} + N_{other,i}^{size}\right) \bmod P * K > 0$,
a size of a last RBG is

$$RBG_{last}^{size} = \left(N_{other,i}^{start} + N_{other,i}^{size}\right) \bmod P * K$$

, otherwise, the size of the last RBG is P * K, and a size of remaining RBGs is P*K;
where P represents a size of a RBG of the first frequency domain resource range, K represents a ratio of a bandwidth of the second frequency domain resource range to a bandwidth of the first frequency domain resource range; $N_{other,i}^{start}$ represents a resource starting position of the second frequency domain resource range, and $N_{other,i}^{size}$ represents a bandwidth size of the second frequency domain resource range or a number of PRBs.

8. A method for frequency domain resource assignment, applied to a terminal, comprising:
receiving downlink control information (DCI) sent by a network side device, wherein the DCI is used to indicate frequency domain resource assignment for physical shared channel, and frequency domain resources of the physical shared channel are located within one or more frequency domain resource ranges.

9. The method of claim 8, wherein the DCI comprises a first information field and a second information field;

the first information field is used to indicate index(s) of the one or more frequency domain resource ranges where the frequency domain resources of the physical shared channel are located in; and
the second information field is used to indicate the frequency domain resource assignment within a frequency domain resource range.

10. The method of claim 9, wherein the first information field uses a bitmap or a codepoint to indicate the terminal the index(s) of one or more scheduled frequency domain resource ranges .

11. The method of claim 9, wherein the one or more frequency domain resource ranges comprise: a first frequency domain resource range with minimum bandwidth and at least one second frequency domain resource range other than the first frequency domain resource range.

12. The method of claim 9 or 11, wherein a size of bits of the second information field is equal to a size of bits for resource assignment determined based on a bandwidth of the first frequency domain resource range.

13. The method of claim 12, wherein when the frequency domain resource assignment is type 1, a start resource block (RB) of the second frequency domain resource range corresponding to a resource indication value (RIV) included in the second information field is:

$$RB_{start} = 0, K, 2 \cdot K, ..., (N_{min}^{size} - 1) \cdot K;$$

a number of RBs that are consecutively assigned is $L_{RBs} = K, 2 \cdot K, ..., N_{min}^{size} \cdot K$;

where, $N_{min}^{size}$ represents a bandwidth size of the first frequency domain resource range or a number of physical resource blocks (PRBs); and K represents a ratio of a bandwidth of the second frequency domain resource range to the bandwidth of the first frequency domain resource range.

14. The method of claim 12, wherein when the frequency domain resource assignment is type 0, bits of the second information field correspond to resource block groups (RBGs) of the second frequency domain resource range,

wherein a size of a first RBG is

$$RBG_0^{size} = P * K - N_{other,i}^{start} \bmod P * K$$

;

$$_{if} \left( N_{other,i}^{start} + N_{other,i}^{size} \right) \bmod P * K > 0$$

,

a size of a last RBG is

$$RBG_{last}^{size} = \left( N_{other,i}^{start} + \right.$$

$$\left. N_{other,i}^{size} \right) \bmod P * K$$

, otherwise, the size of the last RBG is P ∗ K, and a size of remaining RBGs is P*K;

where P represents a size of RBG of the first frequency domain resource range, K represents a ratio of a bandwidth of the second frequency domain resource range to the bandwidth of the first frequency domain resource range;

$N_{other,i}^{start}$ represents a resource starting position of the second frequency domain resource range, and $N_{other,i}^{size}$ represents a bandwidth size of the second frequency domain resource range or a number of PRBs.

15. An apparatus for frequency domain resource assignment, applied to a network side device, comprising:
a transceiver module, configured to send downlink control information (DCI) to a terminal, wherein the DCI is used to indicate frequency domain resource assignment for physical shared channel, and frequency domain resources of the physical shared channel are located within one or more frequency domain resource ranges.

16. An apparatus for frequency domain resource assignment, applied to a terminal, comprising:
a transceiver module, configured to receive downlink control information (DCI) sent by a network side device, wherein the DCI is used to indicate frequency domain resource assignment for physical shared channel, and frequency domain resources of the physical shared channel are located within one or more frequency domain resource ranges.

17. A communication device comprising: a processor and a memory having a computer program stored thereon, wherein when the computer program is executed by the processor, the method of any one of claims 1 to 7 or the method of any one of claims 8 to 14 is performed.

18. A computer-readable storage medium having instructions stored thereon, wherein when the instructions are executed by a computer, the method of any one of claims 1 to 7 or the method of any one of claims 8 to 14 is performed.

send downlink control information (DCI) to a terminal, in which the DCI is used to indicate frequency domain resource assignment for physical shared channel, and frequency domain resources of the physical shared channel are located within one or more frequency domain resource ranges

11

**FIG. 1**

600MHz

10MHz

**FIG. 2**

1900MHz

20MHz

**FIG. 3**

3550MHz

30MHz

**FIG. 4**

transceiver module 51

processing module 52

50

**FIG. 5**

## INTERNATIONAL SEARCH REPORT

| International application No. |
| --- |
| **PCT/CN2022/131738** |

| A. | CLASSIFICATION OF SUBJECT MATTER |
| --- | --- |

H04W 72/04(2023.01)i

According to International Patent Classification (IPC) or to both national classification and IPC

| B. | FIELDS SEARCHED |
| --- | --- |

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

WPABS; CNTXT; CNKI; ENTXT; 3GPP: DCI, 物理共享信道, PDSCH, PUSCH, 频域资源分配, BWP, 索引, 位图, 码点, FDRA, RIV, RGB, physical w shared w channel, physical w domain, resource w allocate+, index, bitmap, codepoint

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113630873 A (VIVO COMMUNICATION TECHNOLOGY CO., LTD.) 09 November 2021 (2021-11-09)<br>    description, paragraphs 30-220 | 1-18 |
| X | CN 111434165 A (APPLE INC.) 17 July 2020 (2020-07-17)<br>    description, pp. 23-30 | 1-18 |
| X | US 2021176028 A1 (BEIJING UNISOC COMMUNICATIONS TECHNOLOGY CO., LTD.)<br>10 June 2021 (2021-06-10)<br>    description, paragraphs 74-158 | 1-18 |
| A | US 2021227528 A1 (SAMSUNG ELECTRONICS CO., LTD.) 22 July 2021 (2021-07-22)<br>    entire document | 1-18 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 January 2023** | **16 January 2023** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/131738**

| Patent document cited in search report | | | Publication date (day/month/year) | Patent family member(s) | | | Publication date (day/month/year) |
|---|---|---|---|---|---|---|---|
| CN | 113630873 | A | 09 November 2021 | None | | | |
| CN | 111434165 | A | 17 July 2020 | DE | 112018000160 | T5 | 01 August 2019 |
| | | | | WO | 2018232284 | A1 | 20 December 2018 |
| US | 2021176028 | A1 | 10 June 2021 | CN | 110830194 | A | 21 February 2020 |
| | | | | EP | 3836468 | A1 | 16 June 2021 |
| | | | | WO | 2020029698 | A1 | 13 February 2020 |
| US | 2021227528 | A1 | 22 July 2021 | KR | 20210092593 | A | 26 July 2021 |
| | | | | CN | 114946151 | A | 26 August 2022 |
| | | | | WO | 2021145640 | A1 | 22 July 2021 |
| | | | | EP | 4070497 | A1 | 12 October 2022 |

Form PCT/ISA/210 (patent family annex) (January 2015)

**EP 4 432 755 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111342504